Europäisches Patentamt

European Patent Office

Office européen des brevets

(11) Publication number: **0 294 952 B1**

## EUROPEAN PATENT SPECIFICATION

(45) Date of publication of patent specification: **08.04.92**

(51) Int. Cl.5: **F16F 9/46**

(21) Application number: **88304527.0**

(22) Date of filing: **19.05.88**

(54) **Hydraulic double-acting damper.**

(30) Priority: **08.06.87 US 59014**

(43) Date of publication of application:
**14.12.88 Bulletin 88/50**

(45) Publication of the grant of the patent:
**08.04.92 Bulletin 92/15**

(84) Designated Contracting States:
**DE ES FR GB**

(56) References cited:
**EP-A- 0 186 324**
**EP-A- 0 207 409**
**US-A- 4 527 676**

(73) Proprietor: **GENERAL MOTORS CORPORA-TION**
**General Motors Building 3044 West Grand Boulevard**
**Detroit Michigan 48202(US)**

(72) Inventor: **Kruckemeyer, William Charles**
**2935 Tara Trail**
**Xenia Ohio 45385(US)**
Inventor: **Fannin, Wayne Vincent**
**2098 Upper Bellbrook Road**
**Xenia Ohio 45385(US)**

(74) Representative: **Denton, Michael John et al**
**Patent Section Vauxhall Motors Limited 1st Floor Gideon House 26 Chapel Street Luton Bedfordshire LU1 2SE(GB)**

Rank Xerox (UK) Business Services

## Description

This invention relates to shock absorbers and suspension struts with hydraulic double-acting dampers for controlling the action of vehicle suspension springs. More particularly, the hydraulic double-acting damper of this invention features a new and improved variable valve and actuator package providing optimized jounce and rebound control for hard intermediate and soft rides.

In EP-A-0,186,324, a selectively variable orifice damper is disclosed in which a selector is operatively mounted within a piston and is rotatably positioned by an actuator to selectively vary bypass orificing sized to accordingly vary the damping characteristics of the unit. With this construction, there is selective and effective control or damping of the action of the vehicle suspension springs. With such variable orificing, the damper can be adjusted to suit the operator's requirements or automatically through a control programmed to match roadway conditions. For example, the damper may be selectively adjusted for flow restriction to provide for a hard ride for sports car performance, for an immediate ride for normal vehicle operation or for soft ride for boulevard rides.

US-A-4,527,676 also describes a damper having a first valve means for restricting damper fluid on jounce and rebound and a second variable orifice valve means for selectively changing the damper characteristics.

The present invention is of this general category but further provides a new and improved hydraulic double-acting damper construction for shock absorbers and suspension struts in which a piston valving and actuator is fully unitized for improved operation and improved installation and securement into a tubular piston rod.

A hydraulic double-acting damper in accordance with the present invention is characterized over EP-A-0,186,324 by the features specified in the characterizing portion of Claim 1. The piston of this invention has an enlarged head portion which houses deflectable spring disk jounce and rebound valving and which has an upwardly extending neck that houses rotatably adjustable bypass valving. This bypass valving is a hydraulically balance valve arrangement with equalized pressures on opposite sides to minimize turning torque requirements. This bypass valving is further hydraulically balanced axially with radial dual flow opening design. The upstanding neck of the piston readily threads into the internal diameter of an elongated hollow piston rod tube. More specifically, a selector plate rotatably mounted in the upstanding neck of the piston is movable to provide flow control through the bypass passage which parallels the main rebound and jounce valving for a wide range of selective damping actions.

The present invention provides a new and improved hydraulic doubling-acting damper having selectively variable damping characteristics provided by a selector controlled bypass valving housed within a piston and mounted above upper and lower valve spring disk packs that are secured to the upper and lower sides of the main valve plate by connector and flow passage means that hydraulically communicates with the selector.

This invention also provides a new and improved hydraulic double-acting damper for controlling the action of vehicle suspension springs which includes an actuator and rotatable orifice selector plate to provide restrictive flow through a connector to provide bypass passage in parallel with rebound and jounce control valving as defined by upper and lower valve spring disk packs.

This invention also provides a new and improved hydraulic double-acting damper with a selected range of jounce and rebound control and having a piston and valve assembly with minimized dead band height increasing effective working length for improved control of the suspension springs of a vehicle.

The present invention will now be described, by way of example, with reference to the following detailed description and the accompanying drawings, in which:-

Figure 1 is a side elevational view partially in cross-section of a suspension strut incorporating a hydraulic, double-acting damper according to this invention;

Figure 1a is a fragment of the piston rod of this invention:

Figure 2 is an enlarged cross-sectional view of a piston and piston rod assembly of Figure 1;

Figure 3 is a cross-sectional view taken generally along 3-3 of Figure 2;

Figure 4 is a side elevational view partly in cross-section of a shock absorber incorporating a hydraulic, double-acting damper according to this invention; and

Figure 5 is an enlarged view primarily in section of the lower half of the shock absorber or Figure 4 showing the piston valving and operation thereof.

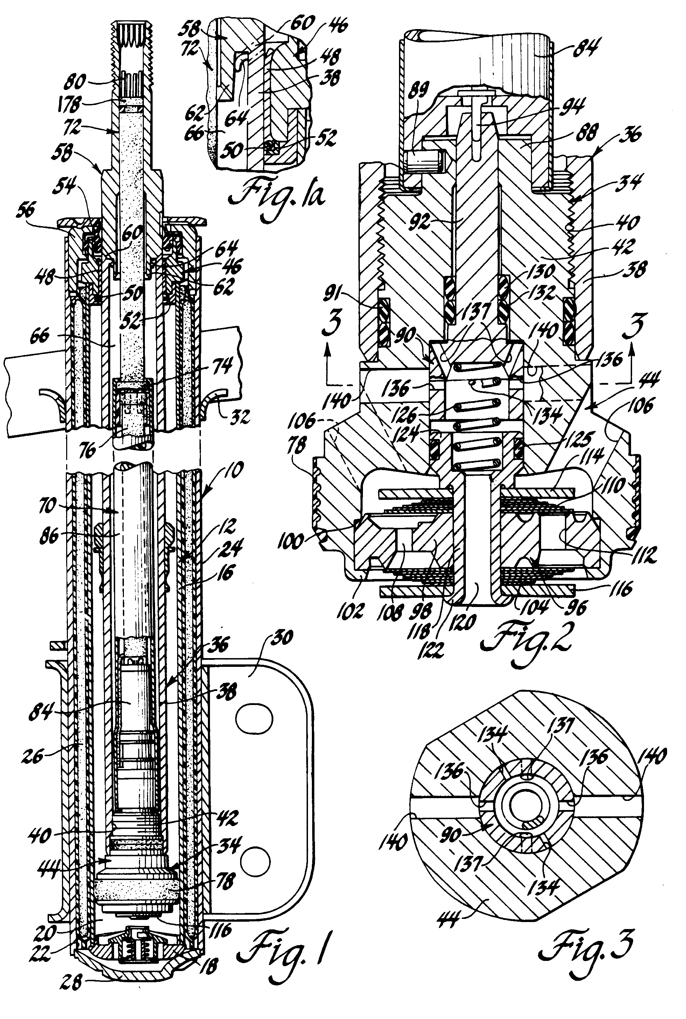

Turning now in greater detail to the drawings, there is shown in Figure 1 a suspension strut 10 incorporating a hydraulic double-acting damper 12 therein adapted to be operatively mounted between sprung and unsprung components of the vehicle. Such mounting is disclosed in U.S. Patent No.4,576,528. The hydraulic double-acting damper 12 has an elongated cylinder tube 16 having a conventional base valve 18 secured in a lower end thereof which controls the passage of oil between an inner variable volume chamber 20 of the cylinder tube 16 and a surrounding oil reservoir 22 formed between the cylinder tube and an outer support tube 24. A "pliacell" bag 26 charged with gas is disposed in the oil reservoir 22 to prevent aeration of the oil in this unit as is known in this art. The outer support tube 24 is closed at its lower end by a base cup 28 on which the base valve 18 is seated. A bracket 30 welded to the exterior and lower end of the outer support tube 24 provides conventional connection to the steering knuckle of a road wheel assembly, not shown. Element 32 is a portion of a lower seat for a vehicle suspension spring which spirals upwardly onto the upper mount such as disclosed in U.S. Patent No.4,175,771.

A valved piston and actuator assembly 34 with a connected piston rod assembly 36 are operatively mounted for linear stroking movement in the elongated cylinder tube 16 during damper operation. The piston rod assembly 36 has a cylindrical tube 38 or piston rod, which is elongated and relatively thin walled, that extends upwardly from a threaded connection 40 which is screw threaded to an upstanding neck 42 of a piston 44 of the valved piston and actuator assembly 34. The cylindrical tube 38 extends upwardly through a rod guide assembly 46 that includes a bushing 48 which is sleeve like and of low friction material, and a high pressure annular seal 50 of suitable plastics material trapped in position by an annular retainer 52. With this construction, bushing 48 can be manufactured with a wide range of tolerance. This rod guide assembly 46 is mounted in the upper end of the elongated cylinder tube 16. From the rod guide assembly 46, the piston rod assembly 36 extends through an annular elastomeric seal 54 and through a cup-like seal cover 56 whose annular depending peripheral flange fits into and is welded to the upper end of the outer support tube 24. The upper end of the piston rod assembly 36 is formed by a tenon 58 which has a thick wall and a stepped diameter, and which is friction welded at 60 to the upper end of the cylindrical tube 38. The tenon 58 has an inner wall 62 concentric with the upper end of the cylindrical tube 38 to form a trap for the flash 64 of the friction weld.

The piston rod assembly 36 formed by tenon 58 and the cylindrical tube 38 has a centralized axial opening 66 for receiving the valved piston and actuator assembly 34, an electrical connector assembly 70, and an electrical connector and bulkhead 72. The electrical connector and bulkhead 72 has a lower headed end 74 having electrical connection to an upper end of a ribbon cable 76 and an upper end 178 having terminals 80 for connection with a female socket with cables leading to a control external of the suspension strut 10 as in US Patent No.4,576,258 cited above. The ribbon cable 76 extends downwardly from the lower headed end 74 of the electrical connector and bulkhead 72 into electrical connection with terminals on the upper end of an electric motor or actuator 84 of the valved piston and actuator assembly 34. An elongated tubular shell 86 of aluminium or other material is crimped over the cylindrical lower end of the actuator 84. The upper end of the elongated tubular shell 86 is crimped over the lower head end 74 of electrical connector and bulkhead 72 to provide a solid connection between the valve piston and actuator assembly 34 and the electrical connector and bulkhead 72. In this invention, the lower end of the actuator 84 provides a cylindrical end wall which closely fits over a reduced diameter cylindrical upper end 88 of the upstanding neck 42 of the piston 44 and is securely fastened thereto by a pin 89. The unification of the actuator 84 and the piston 44 into an assembly improves manufacture and reduces any drive lash between these parts for optimized control as will be further described below. The interior (centralized axial opening 66) of the piston rod assembly 36 is hydraulically sealed from the hydraulic fluid by annular seals 91 between the upstanding neck 42 of the piston 44 and the inner wall of the cylindrical tube 38.

The valved piston and actuator assembly 34 has a cylindrical shell-like main body having upper flow passages therein and is peripherally bounded by a skirt 78 of Teflon or other suitable material having low friction sliding engagement with the inner wall of the elongated cylinder tube 16. Mounted for axial rotational movement within the confines of the upstanding neck 42 of the piston 44 is a rotatable orifice selector plate 90 (second variable orifice valve means) having a drive shaft 92, which is upstanding and of stepped diameter, directly keyed or otherwise connected to the rotatable and downwardly extending output 94 of the actuator 84. The piston 44 has a shell-like main body that houses an orifice plate assembly 96 that includes a cylindrical, relatively thick, fixed orifice plate 98. Rotatable orifice selector plate 90 and orifice plate assembly 96 define a piston plate assembly. The fixed orifice plate 98 is peripherally secured in the main body of the piston 44 between an inner locator shoulder 100 and an inwardly coined lower annular end 102. A lower valve spring disk pack 104 comprised of a series of flat washer-like valve disks of spring steel having decreasing diameter, top to bottom, is mounted adjacent to the bottom of the fixed orifice plate 98 to deflect downwardly in response to the forces of jets of hydraulic fluid thereon through passages 106 and 108 in rebound stroke (unit extension) to thereby control fluid through the fixed orifice plate. An upper valve spring disk pack 110 similar to lower valve spring disk pack 104 comprised of a series of flat washer-like valve discs is mounted adjacent to the top of the fixed orifice plate 98 which deflects in response to the force of jets of hydraulic fluid through passages such as passage 112 on compression to provide control of fluid flow through the fixed orifice plate 98 on jounce stroke as is known by those skilled in this art. The lower and upper valve spring disk packs 104 and 110 (which define first valve means) are held in operative position between upper and lower limit plates 114, 116 by a centralized connector 118 having a flow opening 120 therethrough, a lower coined end 122, and a cylindrical cup-like upper head 124 as shown in Figure 2. An elastomer O-ring seal 125 blocks peripheral fluid passage past the upper head 124. A helical spring 126 interposed between the upper head 124 of the centralized connector 118 and the interior of the rotatable orifice selector plate 90 opposes the inertia of these parts during damper operation and eliminates the need for special fasteners.

The rotatable orifice plate 90 is piloted in the bore through the upstanding neck 42 of the piston 44 and O-ring seals 130 and 132 prevent oil from entering into the cavity of the piston rod 38.

The rotatable orifice selector plate has first and second radial flow-restricting, selector openings or passages, 134 and 136 respectively, providing different flow capacity or restriction therethrough which can be rotated into registry with cross passages 140 extending radially through the upstanding neck 42 of the piston 44 for controlling the flow of shock absorber fluid through the centralized connector 118. The first passage 134 has the smallest diameter and capacity while the second passage 136 is progressively larger in diameter and fluid handling capacity. Rotation of the rotatable orifice selector plate 90 is controlled by the actuator 84. The rotatable orifice selector plate 90 is hydraulically balanced by the provision of passages 137 hydraulically connecting the upper and lower sides of this valve element. Also, hydraulic balance is provided by the opposing cross passages 140, and opposing cross first and second passages 134 and 136.

By rotating the rotatable orifice selector plate 90 to selected positions by control of actuator 84, various combinations of flow control orifices can be chosen to set the rebound and jounce damping characteristics of the suspension strut 10 to meet the operator's requirements and demands. For example, if the rotatable orifice selector plate 90 is rotated to the Figure 3 position in which the (large diameter) second passages 136 are open, rebound damper oil can flow through cross passages 140 in the upstanding neck 42 of the piston 44, the second passages 136 in rotatable orifice selector plate 90 and in flow opening 120 in parallel to the flow through the restricted passages 108 in the fixed orifice plate 98 to effect the first and lower damping force. with this selection the hydraulic double-acting damper 12 has lowest damping force for boulevard type ride. In the event that the operator desires an intermediate ride, the rotatable orifice selector plate 90 is rotated counterclockwise from the Figure 3 position until the first passages 134 are aligned with cross passage 140. In this condition, the suspension spring damping capability of the suspension strut 10 is increased and piston 44 velocity on rebound stroke is increased. The vehicle ride is accordingly at an intermediate condition.

If a hard ride is desired the rotatable orifice selector plate 90 may be selectively rotated so that the flow opening 120 is completely blocked by the rotatable orifice selector plate. During rebound, since flow through the flow opening 120 is blocked to its maximum degree, valve restriction is highest and resistance to piston 44 movement is at its highest. With this action, the suspension spring rate is in effect, increased providing a substantially hard ride for sports car handling.

On jounce with the piston rod assembly 36 moving downwardly in the elongated cylinder tube 16, the fluid in the elongated cylinder tube 16 below the piston 44 will flow through the passage 112 and deflected upper valve spring disk pack 110 as well as the restricted passage as selected through the fixed orifice plate 98 to vary damping forces. However, since the jounce loads are lighter, the curve spread and damping selection is reduced.

While this invention discloses three different independently selected flow control passages, additional passages can be provided so that flow rates through the piston on rebound can be further varied for further tailoring of suspension strut action. Jounce control is similar to that described for rebound control.

Turning now to Figure 4, there is shown a hydraulic, double-acting damper 200, which is generally like hydraulic double-acting damper 12 of the suspension strut 10 and which is operatively mounted between sprung and unsprung components of the vehicle in a conventional manner to check the action of vehicle suspension springs. The hydraulic, double-acting damper 200 incorporates an elongated cylinder tube 202 having a conventional base valve 204 secured in the lower end thereof which controls the passage of oil between the elongated cylinder tube and a surrounding oil reservoir 206 formed between the elongated cylinder tube and a reservoir tube 208. The reservoir tube 208 is closed at its lower end by a base cup 210 on which the base valve 204 is seated. A lower mount 212 welded to the exterior of the base cup 210 provides conventional connection to an unsprung portion of the vehicle.

A valved piston assembly 216 and connected piston rod 218 corresponding to that of the suspension strut 10 of Figure 1 are operatively mounted for linear stroking movement in the elongated cylinder tube 202 during shock absorber operation. Piston rod 218 extends upwardly from the valved piston assembly 216 through a rod guide 220 mounted in the upper end of the elongated cylinder tube 202, through an annular elastomeric seal 222 and through a cup-like seal cover 224 whose peripheral flange fits into and is welded to the upper end of the reservoir tube 208. The upper end of the piston rod 218 may be connected by a suitable elastomer mounting to the spring portion of the vehicle.

The valved piston assembly 216, a selector plate 226, an actuator 228 connected by a pin 230 to the upstanding neck of the piston, a ribbon cable 232 and a housing 234 and a bulkhead and electrical connection 236 are the same as in the first embodiment. With this construction, these components can be unitized and axially inserted into the hollow piston rod 218 and, by turning, connected thereto by the screw threads 238 as in the first embodiment. This ready connection can be made even more secure by staking the piston rod 218 to the threading of the upstanding neck of the piston as indicated at 240.

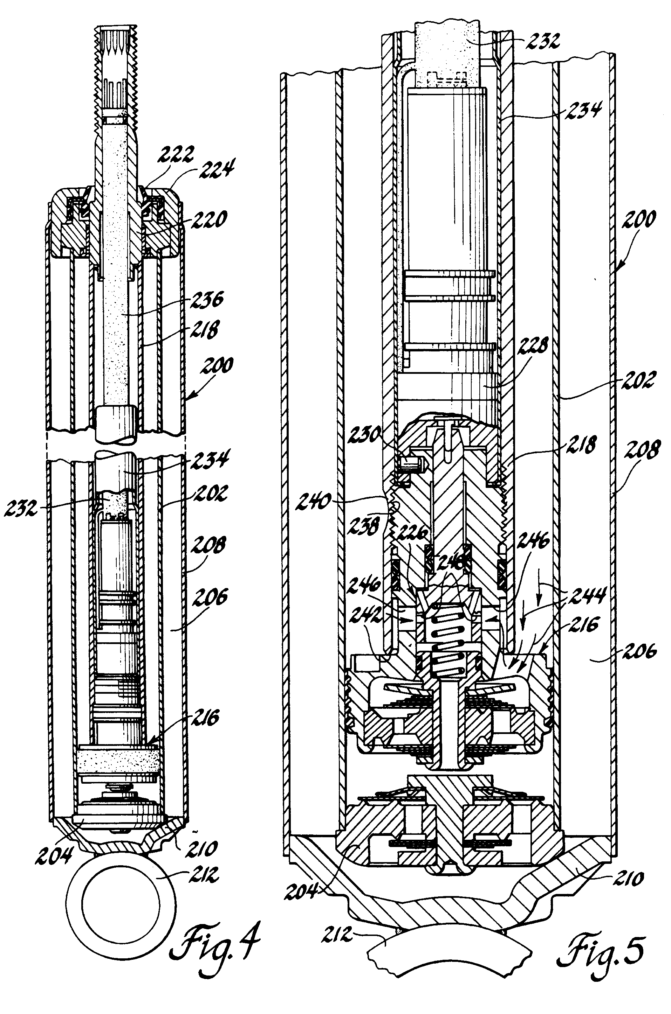

The damper operation and selection of ride characteristics are the same as in the suspension strut 10 in Figure 1. However, with this embodiment, foreshortening of the shock absorber unit is provided by advancing the piston rod 218 so that its lower end 242 contacts the top of the piston head as shown in Figure 5. Rebound flow shown by flow arrows 244 rounds the lower end of the piston rod 218 and flows upwardly in between the piston rod and the upstanding neck of the piston and then into the cross passages 246 in the upstanding neck of the piston. The flow is then through the selected restriction such as at 248. With this construction there is optimized stroke with reduced overall length and attendant advantages in vehicle design.

## Claims

1. A hydraulic double-acting damper (12,200) for controlling the action of vehicle suspension springs comprising an outer support tube (24); a cylinder tube (16,202) mounted within the outer support tube and cooperating therewith to form a reservoir (22,206) for damper fluid; a base valve (18,204) hydraulically connecting said reservoir to said cylinder tube (16,202); a piston rod guide assembly (46) mounted in one end of said cylinder tube (16,202); hollow cylindrical piston tube (38,218) mounted for reciprocating movement in said cylinder tube (16,202) and extending through said rod guide assembly (46) and the one end of said cylinder tube; a piston (44) comprising a head secured to an end of said hollow cylindrical piston tube (38,218); and a piston plate assembly (96,216) operatively mounted in said head and having first valve means (104,110) for restricting the passage of damper fluid therethrough on jounce and rebound stroke of the hydraulic double-acting damper and second variable orifice valve means (90,226) in hydraulic parallel with said first valve means (104,110) for selectively changing the damping characteristics of the hydraulic double-acting damper, said second variable orifice valve means (90,226) comprising a rotary valve (90,226) to provide selective restriction passages (134,136,248) for rotation in said piston (44) for varying the damping characteristics; characterised in that said piston (44) further comprises an upstanding neck (42) integral with the piston head, said upstanding neck (42) being secured within an inner end of said hollow cylindrical piston tube (28,218); in that said second variable orifice valve means (90,226) is positioned in said upstanding neck; and in that said second variable orifice valve means (90,226) includes hydraulic passage means (137) for equalizing pressure effective on said rotary valve (90,226) for low torque movement.

2. A hydraulic double-acting damper as claimed in Claim 1, comprising an actuator (84,228) mounted on said upstanding neck (42) of the piston (44) and having an output (94) directly engaging and rotatably driving said second variable orifice valve means (90).

3. A hydraulic double-acting damper as claimed in Claim 2, wherein the actuator (84) is electrically energizeable, the hydraulic double-acting damper including an electric cable (76,232) connected to said actuator (84) and extending through said hollow cylindrical piston tube (38), and an electrical connector and bulkhead assembly (72,236) within said hollow cylindrical piston tube and electrically connected with said electric cable for connection with controls external of the hydraulic double-acting damper.

4. A hydraulic double-acting damper as claimed in any one of Claims 1 to 3, comprising a thick-walled tenon (58) rigidly secured to the other end of said hollow cylindrical piston tube (38) with an outer diameter to match that of said hollow cylindrical piston tube (38,218).

5. A hydraulic double-acting damper as claimed in Claim 4, wherein said tenon (58) is connected by friction weld (60) to said hollow cylindrical piston tube (38).

6. A hydraulic double-acting damper as claimed in any one of Claims 1 to 5, wherein a connector (118) extends through said first valve means (104,110) and provides a fluid passage (120) therethrough for said second variable orifice valve means (90,226).

7. A hydraulic double-acting damping as claimed in Claim 6, wherein a helical inertia spring (126) is operatively interposed between said connector (118) and said second variable orifice valve means (90,226).

8. A hydraulic double-acting damper as claimed in any one of Claims 1 to 7, wherein said hollow cylindrical piston tube (218) contacts the head of said piston to foreshorten said assembly.

**Revendications**

1. Dispositif amortisseur hydraulique à double effet (12, 200) permettant de régler l'action des ressorts de suspension d'un véhicule, comprenant un tube extérieur de support (24), un tube cylindrique (16, 202) monté à l'intérieur de ce tube extérieur de support et coopérant avec celui-ci pour former un réservoir (22, 206) destiné au fluide d'amortisseur, un clapet de base (18, 204) reliant d'une manière hydraulique le réservoir au tube cylindrique (16, 202), un ensemble de guide-tige de piston (46) monté dans une première extrémité du tube cylindrique (16, 202), un tube cylindrique creux de piston (38, 218) monté de façon à pouvoir effectuer un mouvement de va-et-vient dans le tube cylindrique (16, 202) et traversant l'ensemble de guide-tige (46) et ladite première extrémité du tube cylindrique, un piston (44) comprenant une tête fixée sur une extrémité du tube cylindrique creux de piston (38, 218), et un ensemble de plaque de piston (96, 216), monté d'une manière opérationnelle dans ladite tête et comportant un premier moyen de soupape (104, 110), permettant une restriction du passage du fluide d'amortisseur à travers cet ensemble lors d'une course d'écrasement et de rebondissement du dispositif amortisseur hydraulique à double effet, et un second moyen de soupape (90, 226) à orifice variable, disposé d'une manière parallèle sur le plan hydraulique au premier moyen de soupape (104, 110) et permettant de faire varier d'une manière sélective les caractéristiques d'amortissement du dispositif amortisseur à double effet, ce second moyen de soupape (90, 226) à orifice variable comprenant une soupape rotative (90, 226) qui fournit des passages sélectifs d'étranglement (134, 136, 248) et qui peut pivoter dans le piston (44) de façon à faire varier les caractéristiques d'amortissement, caractérisé en ce que le piston (44) comprend en outre un collet (42) dressé verticalement vers le haut et venu d'une pièce avec la tête de piston, ce collet vertical (42) étant immobilisé à l'intérieur d'une extrémité intérieure du tube cylindrique creux de piston (28, 218), en ce que le second moyen de soupape (40, 226) à orifice variable est disposé dans ce collet vertical, et en ce que ce second moyen de soupape (40, 226) à orifice variable comprend des moyens de passage hydraulique (137) permettant d'égaliser la pression agissant sur la soupape rotative (90, 226) pour un déplacement à faible couple.

2. Dispositif amortisseur hydraulique à double effet suivant la revendication 1, comprenant un actionneur (84, 228) monté sur le collet vertical (42) du piston (44) et présentant un élément de sortie (94) venant directement au contact du second moyen de soupape (90) à orifice variable et entraînant ce dernier en rotation.

3. Dispositif amortisseur hydraulique à double effet suivant la revendication 2, dans lequel l'actionneur (84) est agencé de façon à pouvoir être mis sous tension électrique, le dispositif amortisseur hydraulique à double effet comportant un câble électrique (76, 232) relié à cet actionneur (84) et traversant le tube cylindrique creux de piston (38), et un ensemble connecteur électrique/bloc d'étanchéité (72, 236) disposé dans le tube cylindrique creux de piston et relié électriquement au câble électrique en vue d'un branchement sur des commandes extérieures au dispositif amortisseur hydraulique à double effet.

4. Dispositif amortisseur hydraulique à double effet suivant l'une quelconque des revendications 1 à 3, comprenant un coulisseau (58), à paroi de forte épaisseur, qui est fixé rigidement sur l'autre extrémité du tube cylindrique creux de piston (38), en présentant un diamètre extérieur lui permettant de s'adapter à celui du tube cylindrique creux de piston (38, 218).

5. Dispositif amortisseur hydraulique à double effet suivant la revendication 4, dans lequel le coulisseau (58) est rendu solidaire du tube cylindrique creux de piston (38) par une soudure par friction (60).

6. Dispositif amortisseur hydraulique à double effet suivant l'une quelconque des revendications 1 à 5, dans lequel un connecteur (118) traverse le premier moyen de clapet (104, 110) et offre, à travers ce dernier, un passage de fluide (120) pour le second moyen de soupape (90, 226) à orifice variable.

7. Dispositif amortisseur hydraulique à double effet suivant la revendication 6, dans lequel un ressort hélicoïdal d'inertie (126) est interposé d'une manière opérationnelle entre le connecteur (118) et le second moyen de soupape (90, 226) à orifice variable.

8. Dispositif amortisseur hydraulique à double effet suivant l'une quelconque des revendications 1 à 7, dans lequel le tube cylindrique creux de piston (218) est au contact de la tête dudit piston de façon à raccourcir l'ensemble.

**Patentansprüche**

1. Hydraulischer doppeltwirkender Dämpfer (12, 200) zum Steuern des Betriebs von Fahrzeug-Aufhängungsfedern, welcher umfaßt ein äußeres Stützrohr (24); ein innerhalb des äußeren Stützrohrs angebrachtes und damit zusammen einen Behälter (22, 206) für Dämpfungsfluid bildendes Zylinderrohr (16, 202); ein hydraulisch den Behälter mit dem Zylinderrohr (16, 202) verbindendes Grundventil (18, 204); eine in einem Ende des Zylinderrohrs (16, 202) angebrachte Kolbenstangen-Führungsanordnung (46); ein hohlzylindrisches Kolbenrohr (38, 218), das hin- und herbewegbar in dem Zylinderrohr (16, 202) angebracht ist und sich durch die Stangenführungs-Anordnung (46) und das eine Ende des Zylinderrohrs erstreckt; einen Kolben (44), der einen an einem Ende des hohlzylindrischen Kolbenrohrs (38, 218) befestigten Kopf umfaßt; und eine Kolbenplatten-Anordnung (96, 216), die wirksam in dem Kopf angebracht ist und erstes Ventilmittel (104, 110) zum Begrenzen des Durchlaufs von Dämpfungsfluid bei einem Stoß- und Widerstoßhub des hydraulischen doppeltwirkenden Dämpfers und zweites Ventilmittel (90, 226) mit veränderbarer Mündung, das hydraulisch parallel zu dem ersten Ventilmittel (104, 110) liegt, zum wahlweisen Ändern der Dämpfungscharakteristik des hydraulischen doppeltwirkenden Dämpfers, wobei das zweite Ventilmittel (90, 226) mit veränderbarer Mündung umfaßt ein Drehventil (90, 226) zum Schaffen wahlweiser Begrenzungsdurchlässe (134, 136, 248) zur Drehung in dem Kolben (44) zum Verändern der Dämpfungscharakteristiken; dadurch gekennzeichnet, daß der Kolben (44) weiter umfaßt einen mit dem Kolbenkopf integralen nach oben abstehenden Hals (42), welcher nach oben abstehende Hals (42) innerhalb eines inneren Endes des hohlzylindrischen Kolbenrohrs (38, 218) befestigt ist; daß das zweite Ventilmittel (40, 226) mit veränderbarer Mündung in dem nach oben abstehenden Hals angeordnet ist; und daß das zweite Ventilmittel (40, 226) mit veränderbarer Mündung hydraulisches Durchlaßmittel (137) enthält zum Ausgleichen des auf das Drehventil (90, 226) wirkenden Drucks zur Bewegung mit niedrigem Drehmoment.

2. Hydraulischer doppeltwirkender Dämpfer nach Anspruch 1, welcher umfaßt einen an dem nach oben abstehenden Hals (42) des Kolbens (44) angebrachten Betätiger (84, 228) mit einem Ausgang (94), der direkt an dem zweiten Ventilmittel (90) mit veränderbarer Mündung angreift und es in Drehrichtung antreibt.

3. Hydraulischer doppeltwirkender Dämpfer nach Anspruch 2, bei dem der Betätiger (84) elektrisch beaufschlagbar ist, der hydraulische doppeltwirkende Dämpfer ein an dem Betätiger (84) angeschlossenes Elektrokabel (76, 232) enthält, das sich durch das hohlzylindrische Kolbenrohr (38) erstreckt, und eine elektrische Verbinder- und Durchführungs-Anordnung (72, 236) innerhalb des hohlzylindrischen Kolbenrohrs, die elektrisch mit dem Elektrokabel verbunden ist zur Verbindung mit Steuerungen außerhalb des hydraulischen doppeltwirkenden Dämpfers.

4. Hydraulischer doppeltwirkender Dämpfer nach einem der Ansprüche 1 bis 3, welcher umfaßt einen dickwandigen Zapfen (58), der starr an dem anderen Ende des hohlzylindrischen Kolbenrohrs (38) befestigt ist, mit einem Außendurchmesser, der an das hohlzylindrische Kolbenrohr (38, 218) angepaßt ist.

5. Hydraulischer doppeltwirkender Dämpfer nach Anspruch 4, bei dem der Zapfen (58) durch Reibschweißung (60) mit dem hohlzylindrischen Kolbenrohr (38) verbunden ist.

6. Hydraulischer doppeltwirkender Dämpfer nach einem der Ansprüche 1 bis 5, bei dem ein Verbinder (118) sich durch das erste Ventilmittel (104, 110) erstreckt und einen Fluiddurchlaß (120) durch dieses für das zweite Ventilmittel (90, 226) mit veränderbarer Mündung schafft.

7. Hydraulischer doppeltwirkender Dämpfer nach Anspruch 6, bei dem eine wendelförmige Trägheitsfeder (126) wirksam zwischen den Verbinder (118) und das zweite Ventilmittel (90, 226) mit veränderbarer Mündung eingesetzt ist.

8. Hydraulischer doppeltwirkender Dämpfer nach einem der Ansprüche 1 bis 7, bei dem das hohlzylindrische Kolbenrohr (218) den Kopf des Kolbens berührt, um die Anordnung zu verkürzen.

EP 0 294 952 B1

Fig.1a

Fig.1

Fig.2

Fig.3

Fig.4

Fig.5